# EUROPEAN PATENT SPECIFICATION

(11) **EP 3 417 985 B1**
(45) Date of publication and mention of the grant of the patent: **24.06.2020**
(21) Application number: 17753109.2
(22) Date of filing: 13.02.2017
(51) Int. Cl.: B23K 26/064, B23K 26/03, B23K 26/04, B23K 26/046, B23K 26/18, B23K 26/382, G02B 26/10, B23K 26/06, B23K 26/388

(54) **LASER PROCESSING MACHINE**
LASERBEARBEITUNGSMASCHINE
MACHINE DE TRAITEMENT AU LASER

(30) Priority: 15.02.2016 JP 2016026087
(43) Date of publication of application: 26.12.2018
(73) Proprietor: Mitsubishi Heavy Industries, Ltd., Tokyo 108-8215 (JP)
(72) Inventor: FUJITA, Yoshihito, Ritto-shi Shiga 520-3080 (JP); NAKAGAWA, Kiyotaka, Ritto-shi Shiga 520-3080 (JP); OMOKAWA, Hidefumi, Ritto-shi Shiga 520-3080 (JP)
(74) Representative: Studio Torta S.p.A.
(86) International application number: PCT/JP2017/005073
(87) International publication number: WO 2017/141852

(56) References cited:
- WO-A1-03/023481
- WO-A1-2008/110613
- WO-A1-2013/133128
- CN-A- 102 950 385
- DE-B3-102005 047 328
- JP-A- H0 317 610
- JP-A- 2003 080 391
- JP-A- 2003 088 985
- JP-A- 2003 091 860
- JP-A- 2005 310 771
- JP-A- 2006 123 228
- JP-A- 2011 167 704
- JP-A- 2011 167 704
- JP-A- 2014 042 916
- JP-B1- 5 627 760
- US-A1- 2015 014 889

## Description

### Technical Field

The present invention relates to a laser processing machine that performs processing, such as drilling, on a workpiece using a laser beam.

### Background Art

Laser processing machines are machine tools that oscillate a laser beam having a predetermined wavelength from a laser oscillator to radiate the laser beam to a workpiece via a condensing lens, thereby melting (or evaporating) the workpiece to process drilling or the like, and is suitable for fine processing.

The laser processing machine is provided with a plurality of prisms for displacing and deflecting an optical path of the laser, and a position and an angle at which the laser beam enters the condensing lens, that is, an angle and a position at which the laser beam is radiated to the workpiece via the condensing lens are controlled by the plurality of prisms. Then, as the plurality of prisms are synchronously rotated, the laser beam is turned (trajectory-turned) at a predetermined radiation angle and a predetermined radiation position with respect to the workpiece, and a hole having a predetermined hole shape and a predetermined hole diameter are formed in the workpiece.

In this way, in the laser processing machines, the desired processing shape can be obtained by controlling the radiation trajectory (the radiation angle, the radiation position, the trajectory turning, and the like) of the laser beam. As a technique of controlling the radiation trajectory of the laser beam using the plurality of prisms, for example, there is a laser processing machine disclosed in PTL 1.

### Citation List

### Patent Literature

JP 2011-167704 A discloses a laser processing machine according to the preamble of independent claim 1. US 2015/014889 A1 and DE 10 2005 047 328 B3 each disclose further laser processing machines.

### Summary of Invention

### Technical Problem

JP 2011-167704 A discloses a beam rotator using four or six wedge prisms and a technique in which the trajectory of the laser beam is turned to perform drilling by adjusting the radiation angle and the radiation position of the laser beam depending on a phase difference between the wedge prisms and synchronously rotating the wedge prisms.

However, in JP 2011-167704 A, since driving of a servo motor is transmitted to a cylinder supporting member via a gear, a belt, or the like, and the wedge prisms fitted to the cylinder supporting member are rotated, it is difficult to synchronously rotate the plurality of wedge prisms with high accuracy.

Additionally, in JP 2011-167704 A, the radiation angle and the radiation position of the laser beam are controlling only depending on a relative phase difference of the wedge prisms around a rotation axis, and the laser beam is three-dimensionally deflected even in a case where either the radiation angle or the radiation position of the laser beam is set (changed). Therefore, complicated trajectory calculation is required.

In recent years, further reduction in size of products, such as electronic devices, proceeds, and finer and higher-accuracy processing is required for manufacture of components to be used for these products. However, in the technique disclosed in JP 2011-167704 A, the radiation trajectory of the laser beam cannot be controlled with high accuracy, and fine and high-accuracy processing cannot be performed.

The invention has been made in view of the above problems, and an object thereof is to control the radiation trajectory of a laser beam with high accuracy.

### Solution to Problem

A laser processing machine related to the invention for solving the above problems is a laser processing machine that performs processing on a workpiece using a laser beam. The laser processing machine includes a first prism, a second prism, a third prism, and a fourth prism that are disposed in order from an upstream side on an optical path of the laser beam; a first spindle, a second spindle, a third spindle, and a fourth spindle that respectively and independently hold the first prism, the second prism, the third prism, and the fourth prism; first holding means, second holding means, third holding means, and fourth holding means for respectively and rotatably holding the first spindle, the second spindle, the third spindle, and the fourth spindle; a first motor, a second motor, a third motor, and a fourth motor including rotors respectively fixed to the first spindle, the second spindle, the third spindle, and the fourth spindle, and stators respectively fixed to the first holding means, the second holding means, the third holding means, and the fourth holding means; and prism moving means for moving at least one of the first prism and the second prism. The laser processing machine comprises a parallel flat plate for performing zero point correction for the displacement of the laser beam by the first and second wedge prisms, the parallel flat plate being provided in the second spindle so as to be capable of being tilted with respect to an optical axis and disposed downstream of the second prism on the optical path. The first prism and the second prism are a pair of prisms that displace the laser beam passing therethrough. The third prism and the fourth prism are a pair of prisms that deflect the laser beam passing therethrough.

The first spindle, the second spindle, the third spindle, and the fourth spindle may be rotatably held by the first holding means, the second holding means, the third holding means, and the fourth holding means, via static pneumatic bearings, respectively.

The laser processing machine further may include a condensing lens that is disposed on the optical path of the laser beam and condenses the laser beam radiated to the workpiece; and lens moving means for moving the condensing lens along a turning center axis of the laser beam.

The laser processing machine further may include astigmatism correcting means that is disposed upstream of the first prism on the optical path of the laser beam for correcting an astigmatism of the laser beam.

The astigmatism correcting means may include a pair of cylindrical lenses and a pair of concave lenses.

The laser processing machine further may include polarization converting means that is disposed upstream of the first prism on the optical path of the laser beam for converting a polarization state of the laser beam.

The laser processing machine further may include imaging means for imaging the workpiece to which the laser beam is radiated.

The laser processing machine further may include plasma generation suppressing means for suppressing generation of a plasma when the workpiece is processed by the laser beam.

The laser processing machine further may include plasma suctioning means for suctioning a plasma generated when the workpiece is processed by the laser beam.

The laser beam may be a short-pulse laser of a nanosecond or less.

### Advantageous Effects of Invention

According to the laser processing machine related to the invention, since the first motor and the second motor are rotationally driven by the first prism and second prism directly (without using an indirect mechanism, such as a gear), rotational unevenness due to backlash or the like does not occur, and accurate synchronous rotation is possible. Additionally, the distance between the first prism and the second prism, that is, the amount by which the laser beam passing through the first prism and the second prism is displaced can be controlled by the moving means, and the control can be easily performed. Additionally, since the first prism and the second prism are located upstream of the third prism and the fourth prism on the optical path of the laser beam, the trajectory of the laser beam that enters the third prism and the fourth prism is not three-dimensionally changed (displaced), and the control of the first to fourth prisms can be made simple.

According to the laser processing machine of claim 2, since the first to fourth spindles are rotatable in non-contact with the first to fourth holding means, the vibration resulting from friction or the like is not generated, and the accuracy of the synchronous rotation can be improved.

According to the laser processing machine of claim 3, the condensing lens can be moved in conformity with the surface shape or the like of the workpiece by being made movable along the turning center axis of the laser beam. Therefore, the distance between the condensing lens and workpiece can be controlled without moving (operating) the workpiece to perform the laser processing.

According to the laser processing machine of claim 4, the astigmatism of the laser beam resulting from all optical elements on the optical path of the laser beam can be corrected by the astigmatism correcting means. Since the focal point and shape of the laser beam can be controlled with high accuracy by correcting the astigmatism, fine and high-accuracy processing is possible. Additionally, since the astigmatism correcting means is disposed upstream of the first prism on the optical path, the astigmatism correction of the laser beam, which always enters from the same trajectory, by the astigmatism correcting means is possible before the laser beam is displaced and deflected.

According to the laser processing machine of claim 5, the astigmatism correcting means can be simple in configuration.

According to the laser processing machine of claim 6, the polarization state of the laser beam can be converted in accordance with a processing shape by converting the polarization state of the laser beam with the polarization converting means. That is, fine and high-accuracy processing is possible by making the polarization state of the laser beam suitable for the processing shape.

According to the laser processing machine of claim 7, the aspect of the focal position of the laser beam can be observed by the imaging means. By feeding back this observation to the operation of the laser processing, control of a closed loop is possible.

According to the laser processing machine of claim 8, by suppressing the generation of the plasma by the plasma generation suppressing means, the absorption and scattering of light resulting from the generation of the plasma can be suppressed, and stable processing accuracy can be maintained.

According to the laser processing machine of claim 9, by suctioning the generated plasma with the plasma suctioning means, the absorption and scattering of light resulting from the generation of the plasma can be suppressed, and stable processing accuracy can be maintained.

According to the laser processing machine of claim 10, fine and high-accurate laser processing is possible by using the short-pulse laser pf a nanosecond (ns) or less.

### Brief Description of Drawings

Fig. 1 is a view illustrating a structure of a laser-processing optical head included in a laser processing machine related to Embodiment 1.
Fig. 2A is a view illustrating a structure of first and second prism units in the laser-processing optical head included in the laser processing machine related to Embodiment 1.
Fig. 2B is a view illustrating a structure of third and fourth prism units in the laser-processing optical head included in the laser processing machine related to Embodiment 1.
Fig. 3 is a view illustrating an optical system in the laser-processing optical head included in the laser processing machine related to Embodiment 1.
Fig. 4 is a block diagram illustrating a control in the laser-processing optical head included in the laser processing machine related to Embodiment 1.
Fig. 5 is a view illustrating the vicinity of a focal position of a laser beam in the laser-processing optical head included in the laser processing machine related to Embodiment 1.

### Description of Embodiments

Hereinafter, embodiments of a laser processing machine related to the invention will be described in detail with reference to the accompanying drawings. In addition, it is needless to say that the present invention is not limited to the following embodiments, and various changes can be made without departing from the scope of the invention as defined in the appended claims.

### Embodiment 1

A laser processing machine related to the embodiment 1 of the invention radiates a laser beam to a workpiece W to perform processing, such as drilling, and includes a laser-processing optical head capable of controlling a radiation trajectory of a laser beam to the workpiece W with high accuracy.

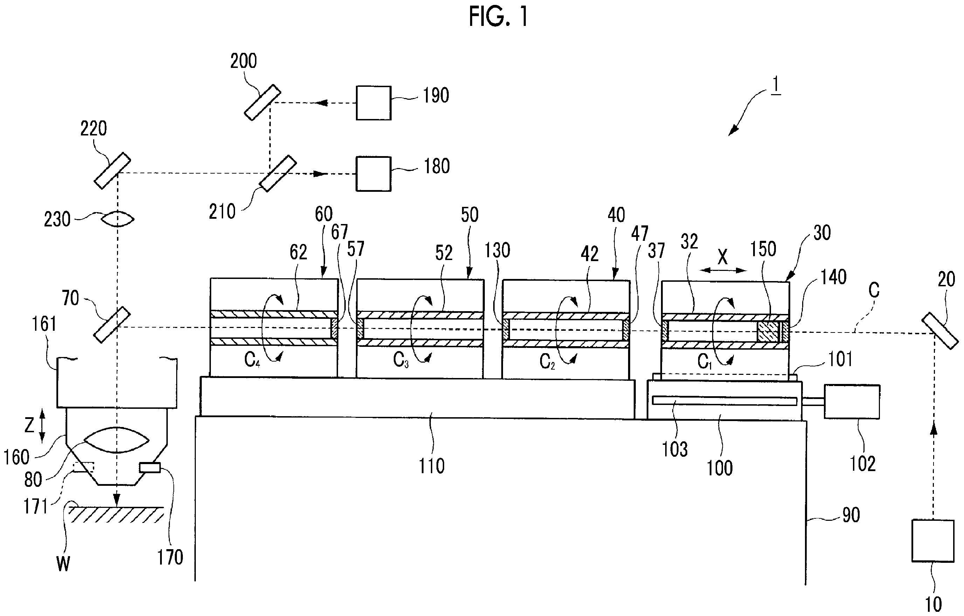

The structure of a laser-processing optical head included in the laser processing machine related to the present embodiment will be described with reference to Figs. 1 to 5.

As illustrated in Fig. 1, a laser-processing optical head 1 is provided with a plurality of prism units (a first prism unit 30, a second prism unit 40, a third prism unit 50, and a fourth prism unit 60) through which a laser beam oscillated from a laser oscillator 10 is guided via a total reflection mirror 20. The laser beam passes through the first to fourth prism units 30, 40, 50, and 60 is radiated to a workpiece W via a dichroic mirror 70 and a condensing lens 80.

Here, the laser processing machine related to the present embodiment is capable of performing ablation processing (processing by evaporation), and the laser oscillator 10 is capable of oscillating a short-pulse laser of a nanosecond (ns) or less as the laser beam. Additionally, the dichroic mirror 70 installed downstream of the first to fourth prism units 30, 40, 50, and 60 on an optical path reflects a laser beam (a light beam of a specific wavelength) oscillated from the laser oscillator 10, and allows light beams of other wavelengths (a wavelength range different from the specific wavelength) to be transmitted therethrough.

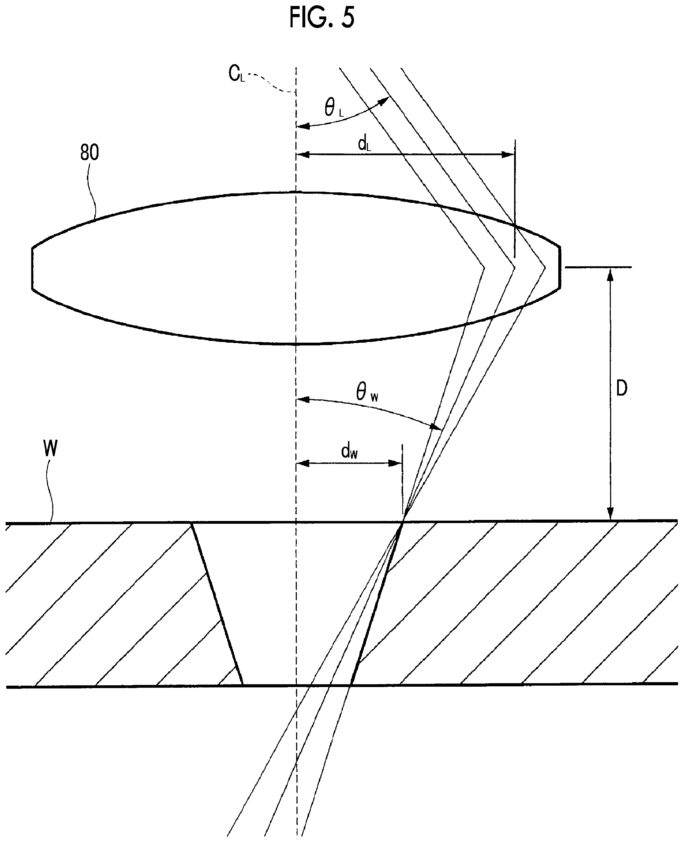

The first to fourth prism units 30, 40, 50, and 60 are arrayed in order from an upstream side (the right side in Fig. 1) of the optical path of the laser beam. As the laser beam passes through the first to fourth prism units 30, 40, 50, and 60 in order, a position (incidence position d_{L}) and an angle (incidence angle θ_{L}) at which the laser beam enters the condensing lens 80, that is, an angle (radiation angle θ_{W}) and a position (radiation position d_{W}) at which the laser beam is radiated to the workpiece W via the condensing lens 80 are controlled (refer to Fig. 5).

As illustrated in Fig. 1, the laser-processing optical head 1 is provided with a first unit table 100 and a second unit table 110 fixed to a supporting frame 90, and the first and second unit tables 100 and 110 are disposed adjacent to each other so as to follow the optical path of the laser beam.

The first unit table 100 is provided with a unit moving rail 101 that extends along the optical path of the laser beam, and the first prism unit 30 is supported to be movable in an X-axis direction (a leftward-rightward direction in Fig. 1) via the unit moving rail 101. Additionally, the first unit table 100 is provided with a unit moving motor 102, and if this unit moving motor 102 is driven, the first prism unit 30 is moved along the unit moving rail 101.

Meanwhile, the second to fourth prism units 40, 50, and 60 are fixed supported by the second unit table 110. On the second unit table 110, the second prism unit 40 is disposed on one side (the right side in Fig. 1) so as to be adjacent to the first prism unit 30, the third prism unit 50 is disposed at the center so as to be adjacent to the second prism unit 40, and the fourth prism unit 60 is disposed on the other side (the left side in Fig. 1) so as to be adjacent to the third prism unit 50.

That is, the first prism unit 30 is supported by the supporting frame 90 so as to be movable via the first unit table 100, whereas the second to fourth prism units 40, 50, and 60 are fixedly supported by the supporting frame 90 via the second unit table 110, and the first prism unit 30 is adapted to be brought close to and separated from the second prism unit 40 by the driving of the unit moving motor 102.

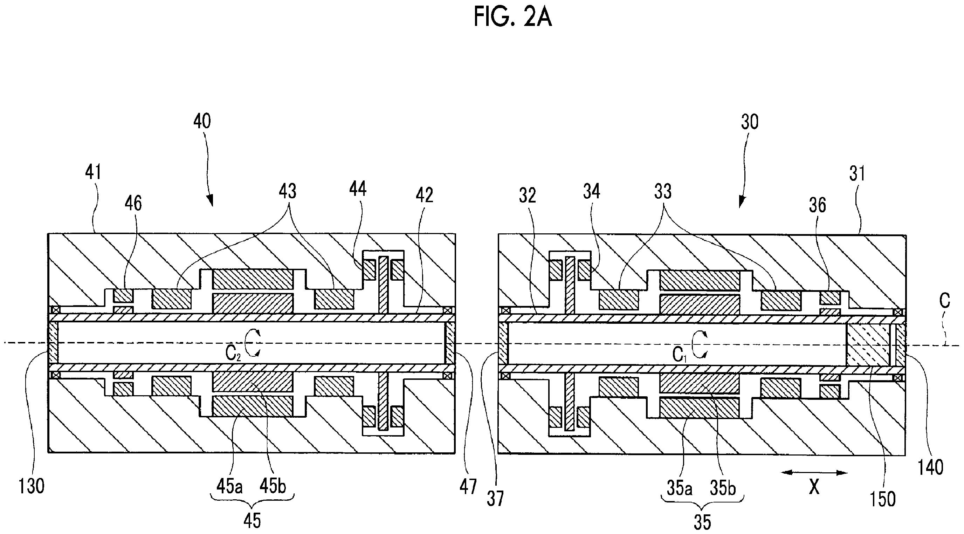

As illustrated in Fig. 2A, the first prism unit 30 is roughly constituted of a unit casing 31 that is an outer shell thereof, and a tubular spindle 32 provided within the unit casing 31. The spindle 32 is supported so as to be rotatable with respect to the unit casing 31 via a radial static pneumatic bearing 33 and a thrust static pneumatic bearing 34. In addition, a center axis of the spindle 32 coincides with the optical path (optical axis C) of the laser beam that is reflected by the total reflection mirror 20 and enters the first prism unit 30, the spindle 32 is adapted rotate around an axis C₁ having the optical axis C as a rotation center.

Additionally, the first prism unit 30 is provided with a first rotary motor 35. The first rotary motor 35 includes a stator 35a fixed to the unit casing 31, and a rotor 35b fixed to the spindle 32. Therefore, in the first prism unit 30, if the first rotary motor 35 is driven, the spindle 32 (rotor 35b) is rotated around the axis C₁ with respect to the unit casing 31 (stator 35a).

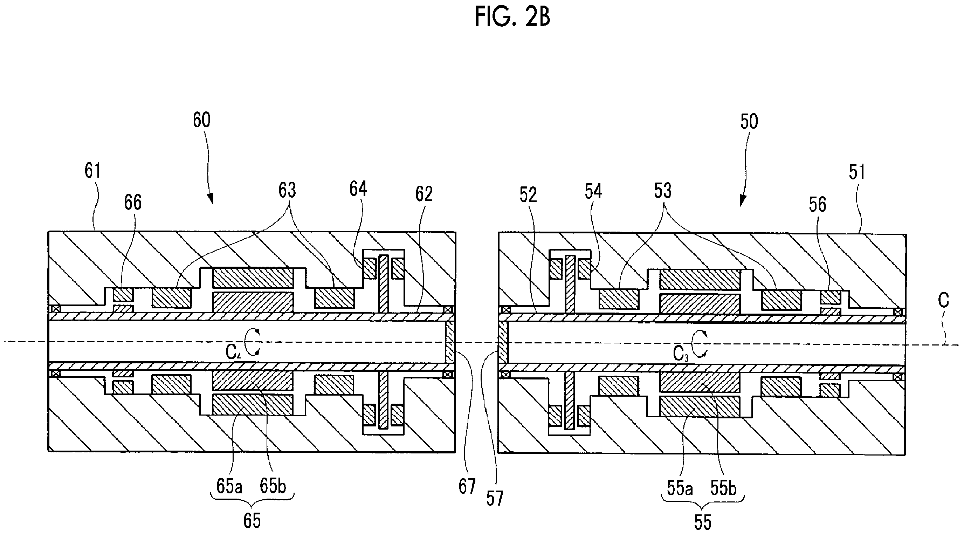

As illustrated in Figs. 2A and 2B, similar to the first prism unit 30, the second to fourth prism units 40, 50, and 60 are respectively provided with unit casings 41, 51, and 61 that are outer shells, tubular spindles 42, 52, and 62 that are supported within the unit casings 41, 51, and 61 so as to be rotatable via radial static pneumatic bearings 43, 53, and 63 and thrust static pneumatic bearings 44, 54, and 64, and second to fourth rotary motors 45, 55, and 65 for rotating the spindles 42, 52, and 62 (rotors 45b, 55b, and 65b) with respect to the unit casings 41, 51, and 61 (stators 45a, 55a, and 65a). In addition, similar to the first spindle 32, center axes of the spindles 42, 52, and 62 coincides with the optical axis C, and the spindles 42, 52, and 62 are respectively adapted to be rotated around an axis C₂, an axis C₃, an axis C₄ having the optical axis C as rotation centers.

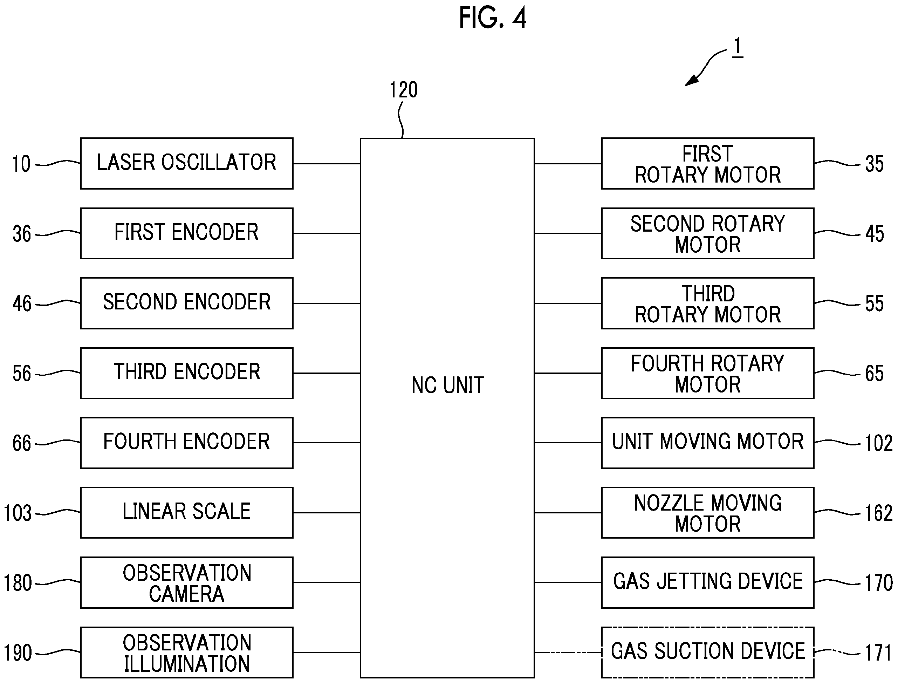

As illustrated in Fig. 4, the laser processing machine related to the present embodiment is provided with an NC unit 120 that controls laser processing, and the unit moving motor 102 and the first to fourth rotary motors 35, 45, 55, and 65 in the laser-processing optical head 1 are electrically connected to the NC unit 120.

Additionally, as illustrated in Figs. 1, 2A, and 2B, the first unit table 100 is provided with a linear scale 103 for detecting the movement distance (a position in the X-axis direction) of the first prism unit 30, and the first to fourth prism units 30, 40, 50, and 60 are respectively provided with encoders (a first encoder 36, a second encoder 46, a third encoder 56, a fourth encoder 66) for detecting the rotational phases of the spindles 32, 42, 52, and 62.

The linear scale 103 and the first to fourth encoders 36, 46, 56, and 66 are electrically connected to the NC unit 120, and information on the movement distance of the first prism unit 30 detected by the linear scale 103 and the rotational phases of the first to fourth spindles 32, 42, 52, and 62 detected by the first to fourth encoders 36, 46, 56, and 66 are sent to the NC unit 120 (refer to Fig. 4).

The NC unit 120 is adapted to be capable of controlling the unit moving motor 102 and the first to fourth rotary motors 35, 45, 55, and 65 on the basis of these kinds of information (the movement distance of the first prism unit 30 and the rotational phases of the first to fourth spindles 32, 42, 52, and 62).

As illustrated in Fig. 1, the first to fourth prism units 30, 40, 50, and 60 are respectively provided with prisms (a first wedge prism 37, a second wedge prism 47, a third wedge prism 57, a fourth wedge prism 67) for displacing or deflecting the optical path of the laser beam. The first to fourth wedge prisms 37, 47, 57, and 67 are respectively fixedly supported within the spindles 32, 42, 52 and 62 in the first to fourth prism units 30, 40, 50, and 60, and are adapted to rotate around the axis C₁, the axis C₂, the axis C₃, and the axis C₄ together with the spindles 32, 42, 52, and 62 by the driving of the first to fourth rotary motors 35, 45, 55, and 65 (refer to Figs. 2A and 2B).

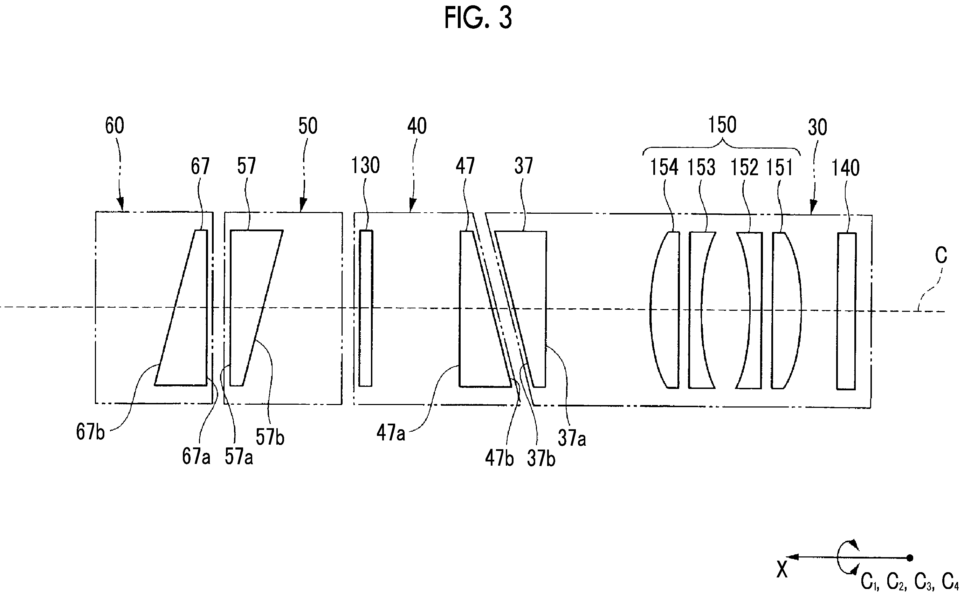

As illustrated in Fig. 3, the first to fourth wedge prisms 37, 47, 57, and 67 are prisms having wedge-shaped sections, and are disposed such that one surfaces (orthogonal surfaces) 37a, 47a, 57a, and 67a are orthogonal to the optical axis C, and the other surfaces (tilted surfaces) 37b, 47b, 57b, and 67b are tilted with respect to the optical axis C (are not parallel or orthogonal). Therefore, the laser beam is deflected (refracted) when passing through the first to fourth wedge prisms 37, 47, 57, and 67.

The first wedge prism 37 and the second wedge prism 47 are disposed such that their mutual tilted surfaces 37b and 47b face each other. As the laser beam passes through the first and second wedge prisms 37 and 47, respective deflection angles thereof are offset and moved (displaced) parallel to the optical axis C.

The amount (displacement amount) by which the laser beam is displaced varies in accordance with a distance between the first wedge prism 37 and the second wedge prism 47, and influences the radiation angle θ_{W} of the laser beam that passes through the condensing lens 80 and is radiated to the workpiece W (refer to Fig. 5). That is, the displacement amount of the laser beam, that is, the radiation angle θ_{W}, is controlled by the driving of the unit moving motor 102.

Additionally, as illustrated in Fig. 1, the laser-processing optical head 1 is provided with a parallel flat plate 130 for performing zero point correction for the displacement of the laser beam by the first and second wedge prisms 37 and 47. The parallel flat plate 130 is provided to be capable of being tilted with respect to the optical axis C within the spindle 42 of the second prism unit 40, and is disposed so as to be located downstream of the first and second wedge prisms 37 and 47 on the optical path and upstream of the third and fourth wedge prisms 57 and 67 on the optical path.

Therefore, the laser beam that has passed through the first and second wedge prism 37 and 47 enters the third and fourth wedge prisms 57 and 67 after being displaced in accordance with the tilt angle of the parallel flat plate 130. That is, in a case where the first wedge prism 37 and the second wedge prism 47 have a predetermined distance (the first prism unit 30 is at a predetermined position) therebetween, the zero point correction for the displacement of the laser beam by the first and second wedge prisms 37 and 47 can be performed by tilting the parallel flat plate 130 to make the laser beam coincide with the optical axis C.

As illustrated in Fig. 3, the third wedge prism 57 and the fourth wedge prism 67 are disposed such that their mutual orthogonal surfaces 57a and 67a face each other. As the laser beam passes through the third and fourth wedge prisms 57 and 67, the laser beam is deflected (tilted) with respect to the optical axis C by an angle (deflection angle) at which respective deflection angles thereof are combined together.

The angles (deflection angles) at which the laser beam is deflected vary in accordance with a rotational phase difference between the third wedge prism 57 and the fourth wedge prism 67, and influence the radiation position d_{W} of the laser beam that passes through the condensing lens 80 and is radiated to the workpiece W (refer to Fig. 5). That is, the deflection angle of the laser beam, that is, the radiation position d_{W}, is controlled by the driving of the third and fourth rotary motors 55 and 65.

Additionally, as illustrated in Fig. 1, the laser-processing optical head 1 is provided with a polarization conversion element 140 for converting the polarization state of the laser beam into a predetermined polarization state (for example, linearly polarized light, circularly polarized light, elliptically polarized light, radially polarized light, azimuth (concentrically) polarized light, or the like). The polarization conversion element 140 is attached within the spindle 32 in the first prism unit 30, and is disposed so as to be located upstream of the first wedge prism 37 on the optical path.

Therefore, the laser beam oscillated from the laser oscillator 10 is reflected by the total reflection mirror 20, is converted into a desired polarization state by the polarization conversion element 140, and then enters the first to fourth wedge prisms 37, 47, 57, and 67. there are various types of polarization conversion In addition, as the polarization conversion element 140, elements according to predetermined polarization states to be converted into. In the laser-processing optical head 1, in accordance with a processing shape to be applied to the workpiece W, one type of polarization conversion element 140 is selected or two or more types of polarization conversion elements 140 are used in combination.

Additionally, a diffractive optical element (not illustrated) may be provided instead of or together with the polarization conversion element 140. That is, by using the diffractive optical element, not only it is possible to optimize the shape of the laser beam and improve the processing accuracy by the laser beam but also it is possible to process a shape not limited to round holes.

Additionally, as illustrated in Fig. 1, the laser-processing optical head 1 is provided with an astigmatism correction optical element 150 for correcting the astigmatism of the laser beam. The astigmatism correction optical element 150 is attached within the spindle 32 in the first prism unit 30, and is disposed so as to be located upstream of the first wedge prism 37 on the optical path.

As illustrated in Fig. 3, in the astigmatism correction optical element 150, a first cylindrical lens 151 having a protrusion on the upstream side of the optical path, a first concave lens 152 having a recess on the downstream side of the optical path, a second concave lens 153 having a recess on the upstream side of the optical path, and a second cylindrical lens 154 having a protrusion on the downstream side of the optical path are disposed in order from the upstream side of the optical path.

The astigmatism of the laser beam is corrected by adjusting the distance between the first cylindrical lens 151 and the first concave lens 152 and the second concave lens 153 and the second cylindrical lens 154 and the phases (rotational phases around the C axis) thereof. In addition, the adjustment of the distance and the phases are performed by an operator or the NC unit 120 via a mechanical mechanism that is not illustrated.

As illustrated in Fig. 1, the laser-processing optical head 1 is provided with a nozzle head 160 to which the condensing lens 80 is attached, a nozzle body 161 that supports the nozzle head 160 so as to be slidable in a Z-axis direction, and a nozzle moving motor 162 (refer to Fig. 4) that slides the nozzle head 160 with respect to the nozzle body 161. Therefore, if the nozzle moving motor 162 is driven, the nozzle head 160 and the condensing lens 80 is moved in the Z-axis direction with respect to the workpiece W. That is, by controlling the driving of the nozzle moving motor 162, the condensing lens 80 can be moved in the Z-axis direction in accordance with the surface shape of the workpiece W, and the focal position of the laser beam to be radiated to the workpiece W via the condensing lens 80 can always be located on the surface of the workpiece W.

Here, the condensing lens 80 is disposed such that a rotational symmetrical axis thereof coincides with a turning center axis C_{L} in trajectory turning of the laser beam to be described below, and the Z-axis direction in which the condensing lens 80 is moved is a direction parallel to the turning center axis C_{L} (refer to Fig. 5). Therefore, there is no case where the turning center axis C_{L} moves (shifts) with respect to the workpiece W due to the movement of the condensing lens 80 in the Z-axis direction.

As illustrated in Fig. 1, the laser-processing optical head 1 is provided with a gas jetting device 170 for jetting gas (plasma suppressing gas) that suppresses generation of plasma resulting from the laser processing. The gas jetting device 170 is provided in the nozzle 160, and the plasma suppressing gas is jetted against a processing position (the focal position of the laser beam) in the workpiece W. Therefore, the generation of the plasma under the laser processing, that is, absorption and scattering of light (laser beam) resulting from generation of plasma can be suppressed, and the processing accuracy by the laser beam can be stabilized. In addition, the plasma suppressing gas includes, for example, helium gas or the like.

Additionally, a plasma suction device 171 (illustrated by a two-dot chain line in Fig. 1) for suctioning the plasma generated resulting from the laser processing may be provided instead of or together with the gas jetting device 170. In this way, by suctioning the plasma generated in the laser processing, the absorption and scattering of light (laser beam) resulting from the generation of the plasma can be suppressed, and the processing accuracy by the laser beam can be stabilized.

Additionally, as illustrated in Fig. 1, the laser-processing optical head 1 is provided with an observation camera 180 and an observation illumination 190 for observing the state of the focal position (processing position of the workpiece W) of the laser beam. The illumination light emitted from the observation illumination 190 reaches the dichroic mirror 70 via a total reflection mirror 200, a half mirror 210, a total reflection mirror 220, and a magnifying lens 230. Since this illumination light is light having a wavelength (a wavelength of the wavelength range different from the specific wavelength) different from the laser beam, the illumination light can be transmitted through the dichroic mirror 70. The illumination light transmitted through the dichroic mirror 70 is radiated to the processing position in the workpiece W via the condensing lens 80, and is reflected by the workpiece W. The reflected light reflected by the workpiece W reaches the dichroic mirror 70 via the condensing lens 80. This reflected light is light having a wavelength (a wavelength of the wavelength range different from the specific wavelength) different from the laser beam, is transmitted through the dichroic mirror 70, and reaches the observation camera 180 via the magnifying lens 230, the total reflection mirror 220, and the half mirror 210.

That is, as the illumination light of the observation illumination 190 is radiated to the processing position in the workpiece W and the state thereof is imaged by the observation camera 180, the processing position in the workpiece W, that is, the focal position of the laser beam, can be visualized, and the operator (or the NC unit 120) can observe (confirm) the state.

The laser processing by the laser processing machine related to the present embodiment is performed by radiating the laser beam to the workpiece W fixed to a work table that is not illustrated, and the radiation trajectory of the laser beam is controlled by the laser-processing optical head 1.

In the control of the radiation trajectory by the laser-processing optical head 1 during the laser processing (drilling in the present embodiment) will be described with reference to Figs. 1 to 5. During drilling, in the laser-processing optical head 1, by performing a setting of the radiation angle θ_{W} of the laser beam, a setting of the radiation position d_{W} of the laser beam, and the trajectory turning of the laser beam, a hole having a predetermined shape and a predetermined internal diameter is formed in the workpiece W.

The setting of the radiation angle θ_{W} (refer to Fig. 5) of the laser beam is performed by driving the unit moving motor 102 and bringing and separating the first prism unit 30 close to and from the second prism unit 40 (moving the first prism unit 30 in the X-axis direction) (refer to Figs. 1 and 2A). That is, the distance between the first wedge prism 37 and the second wedge prism 47 is set to a predetermined value, the laser beam that passes through the first and second wedge prisms 37 and 47 is displaced (moved in parallel) by a predetermined amount, and the radiation angle θ_{W} of the laser beam radiated to the workpiece via the condensing lens 80 is set to a predetermined angle.

In addition, the tilt angle of the parallel flat plate 130 provided in the second prism unit 40 to the optical axis C is adjusted in a case where the zero point correction needed to be performed for the displacement of the laser beam by the first and second wedge prism 37 and 47. That is, the first prism unit 30 is moved to the predetermined position (the distance between the first wedge prism 37 and the second wedge prism 47 is set to the predetermined value) by the driving of the unit moving motor 102, the parallel flat plate 130 is tilted to make the laser beam coincide with the optical axis C, and the zero point correction is performed.

The setting of the radiation position d_{W} (refer to Fig. 5) of the laser beam is performed by driving at least one of the third and fourth rotary motors 55 and 65 and rotating at least one of the third and fourth prism units 50 and 60 around the axis C₃ or the axis C₄ (refer to Figs. 1 and 2B). That is, the third wedge prism 57 and the fourth wedge prism 67 are set to have the predetermined rotational phase difference therebetween, the laser beam passing through the third and fourth wedge prisms 57 and 67 is deflected (tilted) by the predetermined deflection angle, and the radiation position d_{W} of the laser beam to be radiated to the workpiece W via the condensing lens 80 is set to a predetermined position.

Here, although the laser beam to enter the third and fourth wedge prisms 57 and 67 is displaced by the first and second wedge prisms 37 and 47, this displacement is not three-dimensional displacement. This is because the displacement amount of the laser beam when passing through the first and second wedge prism 37 and 47 is controlled depending on the distance between the first wedge prism 37 and the second wedge prism 47. That is, in a case where the displacement amount of the laser beam is changed, the laser beam is always displaced in the same direction (two-dimensional) with respect to the optical axis C. Therefore, since the laser beam that enters the third and fourth wedge prisms 57 and 67 is not three-dimensionally displaced by making calculation of the trajectory of the laser beam simpler compared to the related art (for example, a technique described in PTL 1).

The trajectory turning of the laser beam is performed by driving the first to fourth rotary motors 35, 45, 55, and 65 in a state where the first wedge prism 37 and the second wedge prism 47 is maintained at the predetermined distance and the third wedge prism 57 and the fourth wedge prism 67 are maintained to have the predetermined rotational phase difference (refer to Figs. 1, 2A, and 2B). That is, the first to fourth wedge prisms 37, 47, 57, and 67 are synchronously rotated, the laser beam that passes through the first to fourth wedge prisms 37, 47, 57, and 67 and enters the condensing lens 80 is turned around the turning center axis CL, and the trajectory of the laser beam radiated to the workpiece W via the condensing lens 80 is turned around the turning center axis CL. In this way, by turning the trajectory of the laser beam radiated to the workpiece W around the turning center axis C_{L} at the predetermined radiation angle θ_{W} and the radiation position d_{W}, a hole having a predetermined shape and a predetermined internal diameter can be formed in the workpiece W (refer to Fig. 5).

In the laser-processing optical head 1, the spindles 32, 42, 52, and 62, which fixedly support the first to fourth wedge prisms 37, 47, 57, and 67, are directly driven by the first to fourth rotary motors 35, 45, 55, and 65 without using an indirect mechanism, such as a gear, (refer to Figs. 2A and 2B). Therefore, the spindles 32, 42, 52, and 62, that is, the first to fourth wedge prisms 37, 47, 57, and 67 can be synchronously rotated with high accuracy.

Additionally, in the laser-processing optical head 1, the rotational phases of the spindles 32, 42, 52, and 62 can be detected by the encoders 36, 46, 56, and 66. Therefore, on the basis of detection results of the encoders 36, 46, 56, and 66, the NC unit 120 can control the rotation of the spindles 32, 42, 52, and 62 (first to fourth rotary motors 35, 45, 55, and 65), that is, the first to fourth wedge prisms 37, 47, 57, and 67 and synchronously rotate the first to fourth wedge prisms 37, 47, 57, and 67 with high accuracy (refer to Figs. 2A, 2B, and 4).

Additionally, in the laser-processing optical head 1, the spindles 32, 42, 52, and 62 are supported by individual unit casings 31, 41, 51, and 61 via the radial static pneumatic bearings 33, 43, 53, and 63 and the thrust static pneumatic bearings 34, 44, 54, and 64, and are rotated without coming into contact with the unit casings 31, 41, 51, and 61. Therefore, since contact resistance does not occur between the spindles 32, 42, 52, and 62 and the unit casings 31, 41, 51, and 61, and the vibration during rotation can be suppressed as compared to, for example, a related art in which a rolling bearing is used, the first to fourth wedge prisms 37, 47, 57, and 67 can be synchronously rotated with high accuracy.

Additionally, the laser processing machine related to the present embodiment can perform finer and higher-accuracy laser processing on the workpiece W by controlling the radiation trajectory of the laser beam with higher accuracy in the laser-processing optical head 1. In the laser-processing optical head 1, the conversion of the polarization state of the laser beam and the astigmatism correction of the laser beam are performed as the further control of the radiation trajectory of the laser beam.

The conversion of the polarization state of the laser beam is performed by selecting the polarization conversion element 140 in accordance with a processing shape applied to the workpiece W and attaching the polarization conversion element 140 to the spindle 32 in the first prism unit 30 (refer to Figs. 1 and 2A). For example, in a case where the processing shape applied to the workpiece W is a round shape, the roundness of a round hole formed in the workpiece W can be improved by converting the polarization state of the laser beam into circularly polarized light or radially polarized light by the polarization conversion element 140.

In addition, since the polarization conversion element 140 is disposed upstream of the first to fourth wedge prisms 37, 47, 57, and 67 on the optical path, and the laser beam always enters the polarization conversion element 140 at the same angle and the same position, the conversion of the polarization state by the polarization conversion element 140 is reliably (efficiently) performed.

The correction of the astigmatism of the laser beam is performed by adjusting the astigmatism correction optical element 150, that is, adjusting the distance between the first cylindrical lens 151 and the first concave lens 152 and the second concave lens 153 and the second cylindrical lens 154 and the phases (rotational phases around the C axis) thereof (refer to Figs. 1 and 3). That is, the phase between the first cylindrical lens 151 and the first concave lens 152, the second concave lens 153, and the second cylindrical lens 154 is adjusted in conformity with the deviation direction of focal length resulting from astigmatism, the distance between the first cylindrical lens 151 and the first concave lens 152 and the second concave lens 153, and the second cylindrical lens 154 is adjusted in conformity with the deviation degree of the focal length resulting from astigmatism, and the astigmatism of the laser beam is corrected.

In addition, since the astigmatism correction optical element 150 is disposed upstream of the first to fourth wedge prisms 37, 47, 57, and 67 on the optical path, and the laser beam always enters the astigmatism correction optical element 150 at the same angle and the same position, the correction of the astigmatism by the astigmatism correction optical element 150 is reliably (efficiently) performed.

Additionally, the laser processing machine related to the present embodiment can perform finer and higher-accuracy laser processing on the workpiece W by controlling the radiation trajectory of the laser beam with high accuracy by a closed loop control in the laser-processing optical head 1. The information detected from the first to fourth encoders 36, 46, 56, and 66, the linear scale 103, and the observation camera 180 is fed back to the NC unit 120.

By sending the information on the rotational phases of the spindles 32, 42, 52, and 62 detected by the first to fourth encoders 36, 46, 56, and 66 to the NC unit 120, the NC unit 120 can control the operation of the first to fourth rotary motors 35, 45, 55, and 65 with high accuracy. The spindles 32, 42, 52, and 62, that is, the first to fourth wedge prisms 37, 47, 57, and 67 are synchronously rotated with high accuracy by this control.

By sending the movement distance (the position in the X-axis direction) of the first prism unit 30 detected by the linear scale 103 to the NC unit 120, the NC unit 120 can control the operation of the unit moving motor 102 with high accuracy. By virtue of this control, the first prism unit 30 is moved with high accuracy and the distance between the first prism unit 30 (first wedge prism 37) and the second prism unit 40 (second wedge prism 47) is set with high accuracy, and the displacement amount of the laser beam that passes through the first and second wedge prisms 37 and 47, that is, the radiation angle θ_{W} of the laser beam radiated to the workpiece via the condensing lens 80, is set with high accuracy.

By sending the state of the focal position of the laser beam detected by the observation camera 180 to the NC unit 120, the NC unit 120 (or the operator) can confirm the radiation trajectory (the radiation angle θ_{W}, the radiation position d_{W}, the trajectory turning, the polarization state (the roundness of a hole formed in the workpiece W), or the astigmatism) of the laser beam, and can control the radiation trajectory of the laser beam in according to the state. The radiation trajectory of the laser beam is controlled with high accuracy by this control.

Additionally, the NC unit 120 can move the focal position of the laser beam in conformity with the surface shape of the workpiece W by making the nozzle head 160 slide in the Z-axis direction such that the distance D between the condensing lens 80 and the workpiece W becomes constant on the basis of imaging performed by the observation camera 180. In addition, the NC unit 120 can accurately ascertain the surface shape, the processing position, and the like of the workpiece W on the basis of a recognition mark by adding the recognition mark (not illustrated) capable of being recognized by the observation camera 180 to the surface of the workpiece W.

Of course, the laser processing machine related to the invention is not limited to the laser processing machine that moves the nozzle head 160 (condensing lens 80) on the basis of the imaging of the observation camera 180 as in the present embodiment. For example, the nozzle head 160 (condensing lens 80) may be moved on the basis of three-dimensional processing data of the workpiece W, and the focal position of the laser beam may be matched with the surface shape of the workpiece W.

In addition, it is needless to say that the present invention is not limited to the embodiment described above, and various changes can be made without departing from the scope of the invention as defined in the appended claims. For example, the laser-processing optical head 1 included in the laser processing machine related to the present embodiment may be further provided with an image rotator (for example, a dove prism). Even in a case where such the image rotator is provided in the laser-processing optical head 1, similarly to the present embodiment, the radiation trajectory of a laser beam is controlled with high accuracy, and finer and higher-accuracy laser processing is possible.

### Reference Signs List

1: LASER-PROCESSING OPTICAL HEAD
10: LASER OSCILLATOR
20: TOTAL REFLECTION MIRROR
30: FIRST PRISM UNIT
31: FIRST UNIT CASING (FIRST HOLDING MEANS)
32: FIRST SPINDLE
33: RADIAL STATIC PNEUMATIC BEARING
34: THRUST STATIC PNEUMATIC BEARING
35: FIRST ROTARY MOTOR (FIRST MOTOR)
35a: STATOR IN FIRST ROTARY MOTOR
35b: ROTOR IN FIRST ROTARY MOTOR
36: FIRST ENCODER
37: FIRST WEDGE PRISM (FIRST PRISM)
37a: FLAT SURFACE IN FIRST WEDGE PRISM
37b: TILTED SURFACE IN FIRST WEDGE PRISM
40: SECOND PRISM UNIT
41: SECOND UNIT CASING (SECOND HOLDING MEANS)
42: SECOND SPINDLE
43: RADIAL STATIC PNEUMATIC BEARING
44: THRUST STATIC PNEUMATIC BEARING
45: SECOND ROTARY MOTOR (SECOND MOTOR)
45a: STATOR IN SECOND ROTARY MOTOR
45b: ROTOR IN SECOND ROTARY MOTOR
46: SECOND ENCODER
47: SECOND WEDGE PRISM (SECOND PRISM)
47a: FLAT SURFACE IN SECOND WEDGE PRISM
47b: TILTED SURFACE IN SECOND WEDGE PRISM
50: THIRD PRISM UNIT
51: THIRD UNIT CASING (THIRD HOLDING MEANS)
52: THIRD SPINDLE
53: RADIAL STATIC PNEUMATIC BEARING
54: THRUST STATIC PNEUMATIC BEARING
55: THIRD ROTARY MOTOR (THIRD MOTOR)
55a: STATOR IN THIRD ROTARY MOTOR
55b: ROTOR IN THIRD ROTARY MOTOR
56: THIRD ENCODER
57: THIRD WEDGE PRISM (THIRD PRISM)
57a: FLAT SURFACE IN THIRD WEDGE PRISM
57b: TILTED SURFACE IN THIRD WEDGE PRISM
60: FOURTH PRISM UNIT
61: FOURTH UNIT CASING (FOURTH HOLDING MEANS)
62: FOURTH SPINDLE
63: RADIAL STATIC PNEUMATIC BEARING
64: THRUST STATIC PNEUMATIC BEARING
65: FOURTH ROTARY MOTOR (FOURTH MOTOR)
65a: STATOR IN FOURTH ROTARY MOTOR
65b: ROTOR IN FOURTH ROTARY MOTOR
66: FOURTH ENCODER
67: FOURTH WEDGE PRISM (FOURTH PRISM)
67a: FLAT SURFACE IN FOURTH WEDGE PRISM
67b: TILTED SURFACE IN FOURTH WEDGE PRISM
70: DICHROIC MIRROR
80: CONDENSING LENS
90: SUPPORTING FRAME
100: FIRST UNIT TABLE
101: UNIT MOVING RAIL (PRISM MOVING MEANS)
102: UNIT MOVING MOTOR (PRISM MOVING MEANS)
103: LINEAR SCALE
110: SECOND UNIT TABLE
120: NC UNIT
130: PARALLEL FLAT PLATE
140: POLARIZATION CONVERSION ELEMENT (POLARIZATION CONVERTING MEANS)
150: ASTIGMATISM CORRECTION OPTICAL ELEMENT (ASTIGMATISM CORRECTING MEANS)
151: FIRST CYLINDRICAL LENS
152: FIRST CONCAVE LENS
153: SECOND CYLINDRICAL LENS
154: SECOND CONCAVE LENS
160: NOZZLE HEAD (LENS MOVING MEANS)
161: NOZZLE BODY
162: NOZZLE MOVING MOTOR (LENS MOVING MEANS)
170: GAS JETTING DEVICE (PLASMA GENERATION SUPPRESSING MEANS)
171: GAS SUCTION DEVICE (PLASMA SUCTIONING MEANS)
180: OBSERVATION CAMERA (IMAGING MEANS)
190: OBSERVATION ILLUMINATION (IMAGING MEANS)
200: TOTAL REFLECTION MIRROR
210: HALF MIRROR
220: TOTAL REFLECTION MIRROR
230: MAGNIFYING LENS

## Claims

1. A laser processing machine that performs processing on a workpiece (W) using a laser beam, comprising:
a first wedge prism (37), a second wedge prism (47), a third wedge prism (57), and a fourth wedge prism (67) that are disposed in order from an upstream side on an optical path of the laser beam;
a first spindle (32), a second spindle (42), a third spindle (52), and a fourth spindle (62) that respectively and independently hold the first wedge prism (37), the second wedge prism (47), the third wedge prism (57), and the fourth wedge prism (67);
first holding means (31), second holding means (41), third holding means (51), and fourth holding means (61) for respectively and rotatably holding the first spindle (32), the second spindle (42), the third spindle (52), and the fourth spindle (62);
**characterized by** comprising a first motor (35), a second motor (45), a third motor (55), and a fourth motor (65) including rotors (35b, 45b, 55b, 65b) respectively fixed to the first spindle (32), the second spindle (42), the third spindle (52), and the fourth spindle (62), and stators (35a, 45a, 55a, 65a) respectively fixed to the first holding means (31), the second holding means (41), the third holding means (51), and the fourth holding means (61);
wedge prism moving means (101, 102) for moving at least one of the first wedge prism (35) and the second wedge prism (45), and
a parallel flat plate (130) for performing zero point correction for the displacement of the laser beam by the first (37) and second (47) wedge prisms, the parallel flat plate (130) being provided in the second spindle (42) so as to be capable of being tilted with respect to an optical axis and disposed downstream of the second wedge prism (47) on the optical path,
wherein the first wedge prism (37) and the second wedge prism (47) are a pair of wedge prisms that displace the laser beam passing therethrough, and
wherein the third wedge prism (57) and the fourth wedge prism (67) are a pair of wedge prisms that deflect the laser beam passing therethrough.

2. The laser processing machine according to Claim 1, wherein the first spindle (32), the second spindle (42), the third spindle (52), and the fourth spindle (62) are rotatably held by the first holding means (31), the second holding means (41), the third holding means (51), and the fourth holding means (61), via radial static pneumatic bearings (34,44,54,64) and thrust static pneumatic bearings (33,43,53,63), respectively.

3. The laser processing machine according to Claim 1 or 2, further comprising:
a condensing lens (80) that is disposed on the optical path of the laser beam and condenses the laser beam radiated to the workpiece (w); and
lens moving means (162) for moving the condensing lens along a turning center axis of the laser beam.

4. The laser processing machine according to any one of Claims 1 to 3, further comprising:
astigmatism correcting means (150) that is fixed upstream of the first wedge prism (37) on the optical path in the first spindle (32) for correcting an astigmatism of the laser beam.

5. The laser processing machine according to Claim 4,
wherein the astigmatism correcting means (150) includes a pair of cylindrical lenses (151,153) and a pair of concave lenses (152, 154).

6. The laser processing machine according to any one of Claims 1 to 5, further comprising:
polarization converting means (140) that is fixed upstream of the first wedge prism (37) on the optical path in the first spindle (32) for converting a polarization state of the laser beam.

7. The laser processing machine according to any one of Claims 1 to 6, further comprising:
imaging means (190) for imaging the workpiece (w) to which the laser beam is radiated.

8. The laser processing machine according to any one of Claims 1 to 7, further comprising:
plasma generation suppressing means (170) for suppressing generation of a plasma when the workpiece (w) is processed by the laser beam.

9. The laser processing machine according to any one of Claims 1 to 8, further comprising:
plasma suctioning means (171) for suctioning a plasma generated when the workpiece (w) is processed by the laser beam.

10. The laser processing machine according to any one of Claims 1 to 9,
wherein the laser beam is a short-pulse laser of a nanosecond or less.

## Patentansprüche

1. Laserbearbeitungsmaschine zur Bearbeitung eines Werkstücks (W) mit einem Laserstrahl, umfassend:
ein erstes Keilprisma (37), ein zweites Keilprisma (47), ein drittes Keilprisma (57) und ein viertes Keilprisma (67), die der Reihe nach von einer stromaufwärtigen Seite auf einem optischen Pfad des Laserstrahls angeordnet sind;
eine erste Spindel (32), eine zweite Spindel (42), eine dritte Spindel (52) und eine vierte Spindel (62), die jeweils und unabhängig voneinander das erste Keilprisma (37), das zweite Keilprisma (47), das dritte Keilprisma (57) und das vierte Keilprisma (67) halten;
eine erste Haltevorrichtung (31), eine zweite Haltevorrichtung (41), eine dritte Haltevorrichtung (51) und eine vierte Haltevorrichtung (61) zum jeweiligen und drehbaren Halten der ersten Spindel (32), der zweiten Spindel (42), der dritten Spindel (52) und der vierten Spindel (62);
**dadurch gekennzeichnet, dass**
sie einen ersten Motor (35), einen zweiten Motor (45), einen dritten Motor (55) und einen vierten Motor (65) mit Rotoren (35b, 45b, 55b, 65b) umfasst, die jeweils an der ersten Spindel (32), der zweiten Spindel (42), der dritten Spindel (52) und der vierten Spindel (62) befestigt sind, sowie Statoren (35a, 45a, 55a, 65a), die jeweils an der ersten Haltevorrichtung (31), der zweiten Haltevorrichtung (41), der dritten Haltevorrichtung (51) und der vierten Haltevorrichtung (61) befestigt sind;
Keilprisma-Bewegungsmittel (101, 102), um mindestens von dem ersten Keilprisma (35) und dem zweiten Keilprisma (45) eines zu bewegen, und
eine parallele flache Platte (130) zur Durchführung einer Nullpunktkorrektur für die Verschiebung des Laserstrahls durch das erste (37) und das zweite (47) Keilprisma, wobei die parallele flache Platte (130) in der zweiten Spindel (42) so bereitgestellt wird, dass sie in Bezug auf eine optische Achse gekippt werden kann und
stromabwärts des zweiten Keilprismas (47) auf dem optischen Weg angeordnet ist, wobei das erste Keilprisma (37) und das zweite Keilprisma (47) ein Paar Keilprismen sind, die den durch sie hindurchtretenden Laserstrahl verschieben, und wobei das dritte Keilprisma (57) und das vierte Keilprisma (67) ein Paar Keilprismen sind, die den durch sie hindurchtretenden Laserstrahl ablenken.

2. Laserbearbeitungsmaschine nach Anspruch 1, wobei die erste Spindel (32), die zweite Spindel (42), die dritte Spindel (52) und die vierte Spindel (62) drehbar durch die erste Haltevorrichtung (31), die zweite Haltevorrichtung (41), die dritte Haltevorrichtung (51) und die vierte Haltevorrichtung (61) über statische Radial-Pneumatiklager (34, 44, 54, 64) bzw. statische Axial-Pneumatiklager (33, 43, 53, 63) gehalten werden.

3. Laserbearbeitungsmaschine nach Anspruch 1 oder 2, ferner umfassend:
eine Kondensorlinse (80), die im optischen Weg des Laserstrahls angeordnet ist und den auf das Werkstück (w) gestrahlten Laserstrahl bündelt; und
eine Linsenbewegungsvorrichtung (162) zum Bewegen der Kondensorlinse entlang einer Dreh-Mittelachse des Laserstrahls.

4. Laserbearbeitungsmaschine nach einem der Ansprüche 1 bis 3, ferner umfassend:
eine Astigmatismus-Korrekturvorrichtung (150), die stromaufwärts des ersten Keilprismas (37) auf dem optischen Weg in der ersten Spindel (32) befestigt ist, um einen Astigmatismus des Laserstrahls zu korrigieren.

5. Laserbearbeitungsmaschine nach Anspruch 4, wobei die Astigmatismus-Korrekturvorrichtung (150) ein Paar Zylinderlinsen (151, 153) und ein Paar Konkavlinsen (152, 154) umfasst.

6. Laserbearbeitungsmaschine nach einem der Ansprüche 1 bis 5, ferner umfassend:
eine Polarisationswandlervorrichtung (140), die stromaufwärts des ersten Keilprismas (37) auf dem optischen Weg in der ersten Spindel (32) befestigt ist, um einen Polarisationszustand des Laserstrahls umzuwandeln.

7. Laserbearbeitungsmaschine nach einem der Ansprüche 1 bis 6, ferner umfassend:
eine Abbildungsvorrichtung (190) zum Abbilden des Werkstücks (w), auf das der Laserstrahl gestrahlt wird.

8. Laserbearbeitungsmaschine nach einem der Ansprüche 1 bis 7, ferner umfassend:
eine Plasmaerzeugungs-Unterdrückungsvorrichtung (170) zum Unterdrücken der Erzeugung eines Plasmas, wenn das Werkstück (w) durch den Laserstrahl bearbeitet wird.

9. Laserbearbeitungsmaschine nach einem der Ansprüche 1 bis 8, ferner umfassend:
eine Plasma-Absaugvorrichtung (171) zum Absaugen eines Plasmas, das beim Bearbeiten des Werkstücks (w) durch den Laserstrahl erzeugt wird.

10. Laserbearbeitungsmaschine nach einem der Ansprüche 1 bis 9, wobei der Laserstrahl ein Kurzpulslaser mit einer Dauer von einer Nanosekunde oder weniger ist.

## Revendications

1. Machine de traitement au laser qui réalise un traitement sur une pièce d'ouvrage (W) en utilisant un faisceau laser, comprenant :
un premier prisme en coin (37), un deuxième prisme en coin (47), un troisième prisme en coin (57), et un quatrième prisme en coin (67) qui sont disposés dans l'ordre depuis un côté en amont sur un trajet optique du faisceau laser ;
une première broche (32), une deuxième broche (42), une troisième broche (52), et une quatrième broche (62) qui maintiennent respectivement et indépendamment le premier prisme en coin (37), le deuxième prisme en coin (47), le troisième prisme en coin (57), et le quatrième prisme en coin (67) ;
un premier moyen de maintien (31), un deuxième moyen de maintien (41), un troisième moyen de maintien (51), et un quatrième moyen de maintien (61) pour maintenir respectivement et de manière à pouvoir tourner la première broche (32), la deuxième broche (42), la troisième broche (52), et la quatrième broche (62) ;
**caractérisée en ce qu'**elle comprend un premier moteur (35), un deuxième moteur (45), un troisième moteur (55), et un quatrième moteur (65) incluant des rotors (35b, 45b, 55b, 65b) fixés respectivement à la première broche (32), la deuxième broche (42), la troisième broche (52), et la quatrième broche (62), et des stators (35a, 45a, 55a, 65a) fixés respectivement au premier moyen de maintien (31), au deuxième moyen de maintien (41), au troisième moyen de maintien (51), et au quatrième moyen de maintien (61) ;
un moyen de déplacement de prisme en coin (101, 102) pour déplacer au moins l'un du premier prisme en coin (35) et du deuxième prisme en coin (45), et
une plaque plate parallèle (130) pour réaliser une correction de dérive pour le déplacement du faisceau laser par le premier prisme en coin (37) et le deuxième prisme en coin (47), la plaque plate parallèle (130) étant prévue dans la deuxième broche (42) de manière à pouvoir être inclinée par rapport à un axe optique et disposée en aval du deuxième prisme en coin (47) sur le trajet optique,
dans laquelle le premier prisme en coin (37) et le deuxième prisme en coin (47) sont une paire de prismes en coin qui déplacent le faisceau laser passant à travers ceux-ci, et
dans laquelle le troisième prisme en coin (57) et le quatrième prisme en coin (67) sont une paire de prismes en coin qui dévient le faisceau laser passant à travers ceux-ci.

2. Machine de traitement au laser selon la revendication 1, dans laquelle la première broche (32), la deuxième broche (42), la troisième broche (52), et la quatrième broche (62) sont maintenues, de manière à pouvoir tourner, par le premier moyen de maintien (31), le deuxième moyen de maintien (41), le troisième moyen de maintien (51), et le quatrième moyen de maintien (61), par l'intermédiaire respectivement de paliers pneumatiques statiques radiaux (34, 44, 54, 64) et de paliers pneumatiques statiques de poussée (33, 43, 53, 63).

3. Machine de traitement au laser selon la revendication 1 ou 2, comprenant en outre :
une lentille de condensation (80) qui est disposée sur le trajet optique du faisceau laser et qui condense le faisceau laser émis vers la pièce d'ouvrage (w) ; et
un moyen de déplacement de lentille (162) pour déplacer la lentille de condensation le long d'un axe central de rotation du faisceau laser.

4. Machine de traitement au laser selon l'une quelconque des revendications 1à 3, comprenant en outre :
un moyen de correction d'astigmatisme (150) qui est fixé en amont du premier prisme en coin (37) sur le trajet optique dans la première broche (32) pour corriger un astigmatisme du faisceau laser.

5. Machine de traitement au laser selon la revendication 4,
dans laquelle le moyen de correction d'astigmatisme (150) inclut une paire de lentilles cylindriques (151, 153) et une paire de lentilles concaves (152, 154).

6. Machine de traitement au laser selon l'une quelconque des revendications 1 à 5, comprenant en outre :
un moyen de conversion de polarisation (140) qui est fixé en amont du premier prisme en coin (37) sur le trajet optique dans la première broche (32) pour convertir un état de polarisation du faisceau laser.

7. Machine de traitement au laser selon l'une quelconque des revendications 1 à 6, comprenant en outre :
un moyen d'imagerie (190) pour imager la pièce d'ouvrage (w) vers laquelle le faisceau laser est émis.

8. Machine de traitement au laser selon l'une quelconque des revendications 1 à 7, comprenant en outre :
un moyen de suppression de génération de plasma (170) pour supprimer une génération d'un plasma lorsque la pièce d'ouvrage (w) est traitée par le faisceau laser.

9. Machine de traitement au laser selon l'une quelconque des revendications 1 à 8, comprenant en outre :
un moyen d'aspiration de plasma (171) pour aspirer un plasma généré lorsque la pièce d'ouvrage (w) est traitée par le faisceau laser.

10. Machine de traitement au laser selon l'une quelconque des revendications 1 à 9,
dans laquelle le faisceau laser est un laser à impulsions courtes d'une nanoseconde ou moins.
